# EUROPÄISCHE PATENTSCHRIFT

(11) **EP 2 983 905 B1**
(45) Veröffentlichungstag und Bekanntmachung des Hinweises auf die Patenterteilung: **30.05.2018**
(21) Anmeldenummer: 14705305.2
(22) Anmeldetag: 05.02.2014
(51) Int. Cl.: B29D 30/26, B29D 30/72, B29D 30/30

(54) **VERFAHREN ZUR HERSTELLUNG EINES FAHRZEUGREIFENS**
METHOD FOR PRODUCING A VEHICLE TYRE
PROCÉDÉ DE FABRICATION D'UN PNEUMATIQUE DE VÉHICULE

(30) Priorität: 11.04.2013 DE 102013103629
(43) Veröffentlichungstag der Anmeldung: 17.02.2016
(73) Patentinhaber: Continental Reifen Deutschland GmbH, 30165 Hannover (DE)
(72) Erfinder: LINNE, Stefan, 30900 Wedemark (DE); REITMANN, Sebastian, 31558 Hagenburg (DE)
(74) Vertreter: Widjaja, Wira
(86) Internationale Anmeldenummer: PCT/EP2014/052200
(87) Internationale Veröffentlichungsnummer: WO 2014/166647

(56) Entgegenhaltungen:
- EP-A2- 0 997 263
- WO-A1-2005/105419
- WO-A1-2011/145926
- WO-A1-2012/156146
- DE-A1-102004 008 306
- JP-U- S59 137 025
- US-A1- 2002 108 716

## Beschreibung

Die Erfindung betrifft ein Verfahren zur Herstellung eines Fahrzeugreifens.
Bei konventionellen Fahrzeugreifen ist bekannt die Einlage im Reifenwulst um einen Wulstkern herumzuschlagen. Dadurch wird die Einlage bzw. die Karkasslage fest im Reifenwulst verankert. Solche herkömmlichen Fahrzeugreifen werden dadurch hergestellt, dass zunächst die Innenschicht und die Einlagen als breite Materiallagen auf einer Reifenaufbautrommel angeordnet werden. Anschließend wird der Wulstkern auf die Einlage gesetzt und das Einlagenende um den Kern herumgeschlagen.
Bei der konventionellen Reifenherstellung wird bei einem Verfahrensschritt das Einlagenende von der Reifeninnenseite um den Wulstkern herumgeschlagen. Bei einem zweistufigen Verfahren zur Herstellung von Fahrzeugreifen wird die Reifenkarkasse auf einer separaten Karkasstrommel aufgebaut. Eine solche Karkasstrommel ist in der Regel relativ komplex aufgebaut.

Bei den herkömmlichen Reifenaufbauverfahren werden auf der Karkasstrommel beide Seitenwände aufgewickelt. Anschließend wird die Reifenkarkasse mit den bereits applizierten Seitenwänden zu der Bombiertrommel verfahren. Ein Nachteil bei diesem herkömmlichen Verfahren besteht darin, dass bestimmte Reifenkonstruktionen nicht realisierbar sind.
Die WO 2005/105419 A1 und WO 2011/145926 A1 offenbaren bekannte Verfahren zur Herstellung von Reifen.

Der Erfindung liegt die Aufgabe zugrunde, ein verbessertes Verfahren zur Herstellung von Fahrzeugreifen bereitzustellen.
Durch das Vefahren sollen außerdem spezielle Reifenkonstruktionen realisierbar sein und die Zykluszeit zur Herstellung des Reifenrohlings optimiert werden.

Gelöst wird die Aufgabe gemäß Anspruch 1 dadurch, dass ein Verfahren mit folgenden Schritten eingesetzt wird:
a) Fertigstellen einer Reifenkarkasse auf einer Karkasstrommel,
   wobei auf der Karkasstrommel keine Reifenaufbauteile in Form von Seitenwänden aufgelegt werden,
b) Abnahme der Reifenkarkasse von der Karkasstrommel mit einer Karkasstransfereinheit,
c) Verfahren der Karkasstransfereinheit mit der Reifenkarkasse zu einer Übergabeposition zum Anordnen von zwei Seitenwänden, wobei die zwei Seitenwände auf jeweils einer separaten ersten und zweiten Seitenwandtrommel auf beiden Seiten der Reifenkarkasse in axialer Richtung angeordnet sind,
d) Verfahren der ersten und zweiten Seitenwandtrommel in axialer Richtung zur axialen Mitte der Reifenkarkasse,
   wobei die Seitenwände auf den Seitenwandtrommeln koaxial zu den Reifenwülsten der Reifenkarkasse und auf ein vorgegebenes Anlegemaß angeordnet werden,
e) Expandieren der ersten Seitenwand-Trommel mit der ersten Seitenwand,
   wobei über die Expansionsbewegung die auf der ersten Seitenwand-Trommel anliegende erste Seitenwand mit der koaxial positionierten Reifenkarkasse im Bereich des ersten Reifenwulstes verbunden wird und
f) Expandieren der zweiten Seitenwand-Trommel mit der zweiten Seitenwand,
   wobei über die Expansionsbewegung die auf der zweiten Seitenwand-Trommel anliegende zweite Seitenwand mit der koaxial positionierten Reifenkarkasse im Bereich des zweiten Reifenwulstes verbunden wird,
g) Einfallen der Seitenwandtrommeln und Verfahren der ersten und zweiten Seitenwandtrommel in axialer Richtung nach außen,
   wobei die Reifenkarkasse zum Weitertransport freigegeben wird,
h) Verfahren der Karkasstransfereinheit mit der Reifenkarkasse und den angebundenen Seitenwänden koaxial zu einer Bombiertrommel,
i) Übergabe der Reifenkarkasse von der Karkasstransfereinheit an die Bombiertrommel,
j) Wegfahren der Karkasstransfereinheit von der Bombiertrommel,
k) Bombieren der Reifenkarkasse mit den auf beiden Seiten angebundenen Seitenwänden, wobei die Seitenwände mit einem Hochschlagmittel seitlich an der Reifenkarkasse hochgeschlagen werden und die Reifenkarasse mit dem koaxial angeordneten Gürtel-Laufstreifen-Paket vereinigt wird,
l) Fertigstellen des Reifenrohlings mit weiteren Schritten.

Ein Vorteil der Erfindung ist insbesondere darin zu sehen, dass durch das Verfahren auf einfache Weise ein Fahrzeugreifen hergestellt werden kann.
Das Verfahren ermöglicht ebenfalls die Herstellung von speziellen Reifenkonstruktionen, die mit den herkömmlichen Reifenaufbauverfahren bisher nicht möglich waren. Zu diesen Reifenkonstruktionen zählen insbesondere Fahrzeugreifen, bei denen das obere Ende der Seitenwände bzw. samt Seitenwandbauteilen über den Seitbereichen des Laufstreifens enden. Diese Art der Reifenkonstruktion wird durch die erfindungsgemäße Reihenfolge der Verfahrensschritte nach Patentanspruch 1 ermöglicht. Bedeutend ist dabei, dass die Seitenwand nicht auf der Karkasstrommel appliziert wird, sondern erst auf der Bombiertrommel. Ein weiterer Vorteil besteht darin, dass die Zykluszeit zur Herstellung des Fahrzeugreifens bzw. Reifenrohlings insgesamt optimiert wird.

Die beiden Seitenwand-Trommeln sind weder mit der Karkasstrommel noch mit der Bombiertrommel gekoppelt. Dadurch beanspruchen diese Seitenwand-Trommeln keinen Platz im Bereich der Karkasstrommel oder der Bombiertrommel. Ein weiterer Vorteil besteht darin, dass durch diese Anordnung die Bewegungen der Seitenwand-Trommeln besser gesteuert werden können.

Dadurch, dass die Seitenwandtrommeln in der Übergabeposition auf beiden Seiten der Reifenkarkasse positioniert werden, lassen sich die Seitenwände einfacher an den Reifenwülsten der Reifenkarkasse anordnen. Außerdem kann das Auflegemaß, welches durch den Abstand der Seitenwandtrommeln zueinander bestimmt wird, frei eingestellt werden. Diese Variabilität ist notwendig, um unterschiedliche Reifendimensionen herstellen zu können. Ein weiterer Vorteil besteht darin, dass die Seitenwandtrommeln nach dem Anheften der Seitenwände an die Reifenkarkasse wieder einfacher in ihre Ausgangsposition gebracht werden können. Bei bekanten Verfahren wird die Reifenkarkasse mit den angebundenen Seitenwänden seitlich über beide Seitenwandtrommeln wegverfahren, wodurch beispielsweise Teilbereiche der Seitenwände an den Seitenwandtrommeln hängenbleiben können.

In einer vorteilhaften Weiterbildung der Erfindung ist vorgesehen, dass vor Schritt c) die Seitenwände auf der ersten und zweiten Seitenwand-Trommel vorkonfektioniert werden. Dadurch wird die Zykluszeit zur Herstellung des Reifenrohlings insgesamt verkürzt.

In einer weiteren vorteilhaften Weiterbildung der Erfindung ist vorgesehen, dass die Schritte e) und f) im Wesentlichen gleichzeitig erfolgen, wodurch beide Seitenwände gleichzeitig an die Reifenwülsten der Reifenkarkasse angebunden werden.
Auf diese Weise wird die Zykluszeit wesentlich reduziert.

In einer weiteren vorteilhaften Weiterbildung der Erfindung ist vorgesehen, dass beide Seitenwandtrommeln jeweils an einer separaten Trommelwelle angeordnet sind.

In einer weiteren vorteilhaften Weiterbildung der Erfindung ist vorgesehen, dass die Trommelwellen für die Seitenwandtrommeln an einem L-förmigen Trägersystem angeordnet sind.
Durch das L-förmige Trägersystem werden die daran angebundenen Seitenwandtrommeln mit hoher Stabilität gehalten.

In einer weiteren vorteilhaften Weiterbildung der Erfindung ist vorgesehen, dass bei Schritt d) die Seitenwandtrommeln über ein Schlittensystem in axialer Richtung auf ein vorgegebenes Anlegemaß verfahren werden, wobei jeweils mindestens eine Schlittenlagerung unter dem L-förmigen Trägersystem angeordnet ist. Durch die Schlittenlagerung können die Seitenwandtrommeln mit einer hohen Geschwindigkeit in die jeweilige erforderliche Position gebracht werden.

In einer weiteren vorteilhaften Weiterbildung der Erfindung ist vorgesehen, dass die Seitenwandtrommeln jeweils mit einem separaten Antrieb angetrieben werden, wobei jeweils ein Antrieb für die Durchmesserverstellung und ein Antrieb für die Trommelrotation vorgesehen ist.
Durch die separaten Antriebe lässt sich die Bewegung der Seitenwandtrommeln unabhängig voneinander steuern.

In einer weiteren vorteilhaften Weiterbildung der Erfindung ist vorgesehen, dass die beiden Seitenwandtrommeln mit dem L-förmigen Trägersystem auf einer verfahrbaren Platte angeordnet sind.
Dadurch werden die L-förmigen Trägersysteme auf einer stabilen Unterlage angeordnet.

In einer weiteren vorteilhaften Weiterbildung der Erfindung ist vorgesehen, dass vor Schritt d) die beiden Seitenwandtrommeln mit dem L-förmigen Trägersystem mit einem zweiten Schienensystem für eine Vorwärtsbewegung senkrecht zur axialen Richtung der Reifenkarkasse jeweils neben der Reifenkarkasse positioniert werden.
Dadurch lassen sich die Seitenwandtrommeln mit einer hohen Geschwindigkeit nach vorne fahren, damit die Reifenkarkasse mit den angebundenen Seitenwänden weiterbewegt werden kann.

In einer weiteren vorteilhaften Weiterbildung der Erfindung ist vorgesehen, dass vor Schritt d) die Reifenkarkasse mit der Karkasstransfereinheit von oben zwischen den beiden Seitenwandtrommeln positioniert wird.
Bei diesem Ausführungsbeispiel würden die Seitenwandtrommeln nicht nach vorne verfahren, um die Reifenkarkasse wieder freizugeben. Der Abtransport der Reifenkarkasse mit den angebundenen Seitenwänden erfolgt dadurch, dass die Karkasstransfereinheit zunächst nach oben bewegt wird. Anschließend würde die Karkasstransfereinheit weiter zur Bombiertrommel transportiert werden.

In einer weiteren vorteilhaften Weiterbildung der Erfindung ist vorgesehen, dass nach Schritt d) mit einer zusätzlichen Hochschlag-Vorrichtung an den Seitenwandtrommeln das innenliegende überstehende Seitenwandende auf der Innenseite der Reifenkarkasse hochgeschlagen wird.
Auf diese Weise entfällt das Hochschlagen des innenliegenden überstehenden Seitenwandendes auf der Innenseite der Reifenkarkasse an der Bombiertrommel.

In einer weiteren vorteilhaften Weiterbildung der Erfindung ist vorgesehen, dass bei Schritt d) und g) die Seitenwände über eine Dehnung in radialer Richtung mit der Reifenkarkasse verbunden werden.
Auf diese Weise erfolgt eine präzise Übergabe der Seitenwände an die Reifenkarkasse.

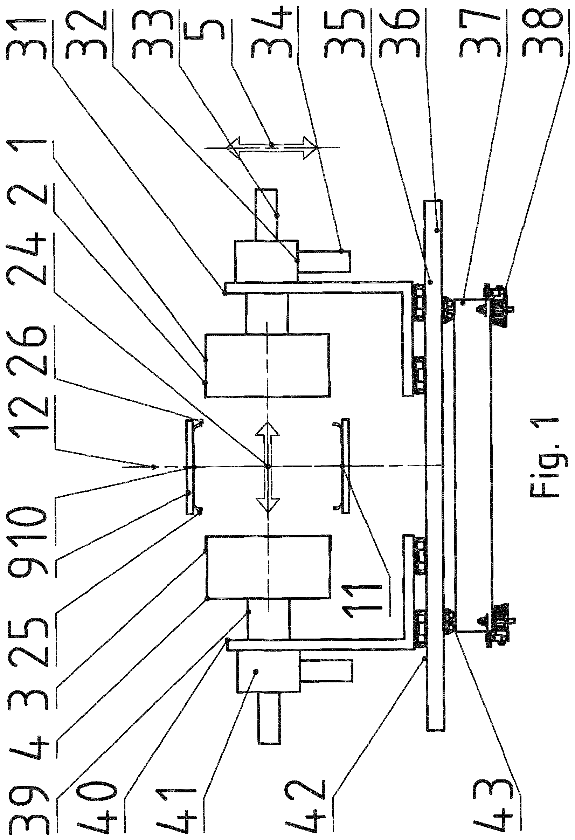

In einer weiteren vorteilhaften Weiterbildung der Erfindung ist vorgesehen, dass bei Schritt a) die Reifenkarkasse auf der Karkasstrommel mit einem Kern und einem Lagenumschlag vorkonfektioniert wird.
Auf diese Weise wird die Zykluszeit insgesamt reduziert. Die Reifenkarkasse mit Kernen und einem Lagenumschlag sind insbesondere in der Figur 1 dargestellt.

In einer weiteren vorteilhaften Weiterbildung der Erfindung ist vorgesehen, dass bei Schritt a) die Reifenkarkasse auf der Karkasstrommel in Form eines flachen Schlauches ohne einen Lagenumschlag vorkonfektioniert wird.
Bei dieser Variante erfolgt auf der Karkasstrommel kein Lagenumschlag. Die Reifenkarkasse wird in Form eines flachen Schlauches zu der Bombiertrommel transferiert. Der Lagenumschlag der Karkasseinlage erfolgt bei dieser Variante zusammen mit dem Hochschlagen der Seitenwände.

In einer weiteren vorteilhaften Weiterbildung der Erfindung ist vorgesehen, dass bei Schritt k) die Seitenwand vor dem Transfer des Gürtel-Laufstreifen-Paketes über die Bombiertrommel hochgeschlagen wird.
Dadurch ist eine bestimmte Reifenkonstruktion realisierbar, bei der die Seitenwand unter dem Gürtel-Laufstreifen-Paket angeordnet werden kann.

In einer weiteren vorteilhaften Weiterbildung der Erfindung ist vorgesehen, dass bei Schritt k) die Seitenwand nach dem Transfer des Gürtel-Laufstreifen-Paketes über die Bombiertrommel hochgeschlagen wird, wobei ein Teil der Seitenwand über dem Laufstreifen angeordnet werden kann.
Dadurch ist es möglich, den oberen Teil der Seitenwand über dem Gürtel-Laufstreifen-Paket anzuordnen.

In einer weiteren vorteilhaften Weiterbildung der Erfindung ist vorgesehen, dass auf den Seitenwandtrommeln außer der Seitenwand weitere Reifenaufbauteile appliziert werden. Als weitere Reifenaufbauteile kommen z. B. Wulstverstärker in Form von gummierten Textil- oder Stohrstahlkordlagen in Frage. Das Auflegen dieser weiteren Reifenaufbauteile auf der Seitenwandtrommel reduziert insgesamt die Zykluszeit.

In einer weiteren vorteilhaften Weiterbildung der Erfindung ist vorgesehen, dass die Hochschlagmittel an der Bombiertrommel in Form einer Vielzahl von Rollenhebeln ausgebildet sind.
Auf diese Weise werden die Seitenwände mit einer hohen Präzision und Schnelligkeit an der Reifenkarkasse hochgeschlagen.

Anhand mehrerer Ausführungsbeispiele soll die Erfindung näher erläutert werden. Es zeigen:

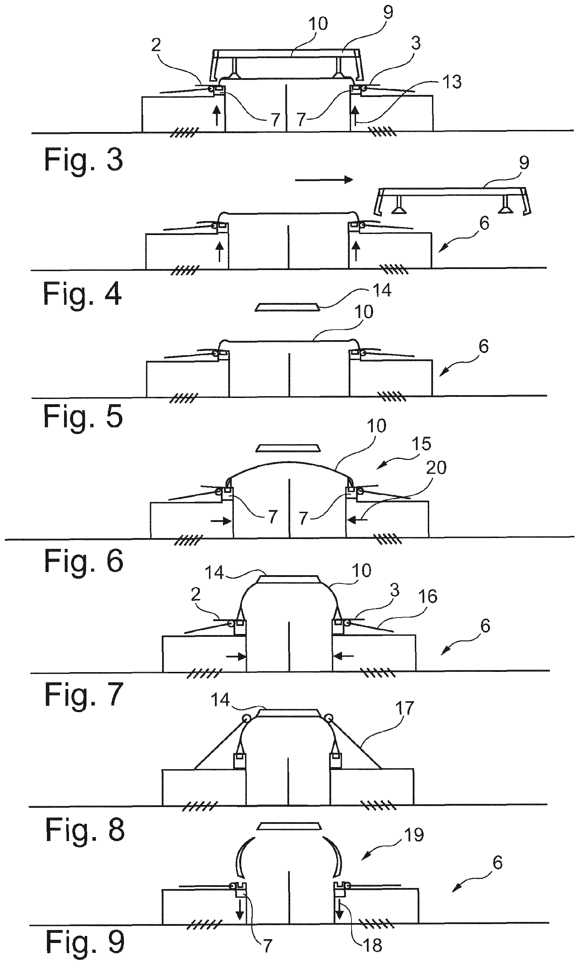

- Figuren 1-9:: ein Ausführungsbeispiel des Verfahrens,

Die Figur 1 zeigt die erste und zweite Seitenwandtrommel 1 und 4 in einer Radial-SchnittAnsicht. Auf den Seitenwandtrommel 1 und 4 werden vorab die linke Seitenwand 3 und die rechte Seitenwand 2 in Form von zwei separaten Ringen aufgewickelt. Die Karkasstransfereinheit 9 hält die Reifenkarkasse 10. Die Reifenkarkasse 10 wurde in vorhergehenden Verfahrensschritten auf einer nicht dargestellten Karkasstrommel hergestellt. Bei diesem Ausführungsbeispiel besitzt die Reifenkarkasse 10 bereits einen Lagenumschlag 11 mit einem konventionellen Reifenkern. Die Reifenkarkasse 10 kann in beiden Bereichen des Reifenwulstes mit nicht dargestellten Haltemitteln der Karkasstransfereinheit 9 gehalten werden.

Nachdem die Karkasstransfereinheit 9 die Reifenkarkasse 10 in der dargestellten Position in Stellung gebracht hat, werden die beiden Seitenwandtrommeln 1 und 4 mit den beiden L-förmigen Trägersystemen 31 und 34 seitlich neben der Reifenkarkasse 10 positioniert. Die beiden Seitenwandtrommeln 1 und 4 sind jeweils über eine Trommelwelle 30 und 39 mit dem dargestellten L-förmigen Trägersystem 31 und 40 verbunden. Jede Seitenwandtrommel 1 und 4 verfügt über einen eigenständigen Antrieb mit einem Getriebekasten 32 und einem Antrieb 33 für die Durchmesserverstellung und einen Antrieb 34 für die Trommelrotation. Die beiden L-förmigen Trägersysteme 31 und 40 besitzen auf der Unterseite jeweils 2 Schlittenlagerungen 35. Durch diese Schlittenlagerung lassen sich beide Seitenwandtrommeln 1 und 4 in axialer Richtung 24 hin und her bewegen. Die Schlittenlagerungen 35 sind wiederum auf einer Platte 36 angeordnet. Auf der Unterseite der Platte 36 befindet sich eine Schlittenlagerung 37 und 43 für ein zweites Schienensystem, welches die Platte mit den L-förmigen Trägersystemen 31 und 40 nach vorne senkrecht zur achxialen Richtung 24 bewegbar macht. Diese Bewegung ist notwendig, um die Reifenkarkasse nach dem Anbinden der Seitenwände für den Weitertransport freizugeben. Bei diesem Ausführungsbeispiel wurde der Lagenumschlag an der Reifenkarkasse 10 bereits durchgeführt. Im nächsten nicht dargestellten Verfahrensschritt werden die beiden Seitenwandtrommeln 1 und 4 in axialer Richtung 24 aufeinander zugefahren und koaxial unterhalb der Reifenkarkasse 10 im Bereich der Seitenwände 2 und 3 posioniert. Bei diesem Verfahrensschritt wird die Übergabe der Seitenwände 2 und 3 an die Reifenwülste der Reifenkarkasse 10 vorbereitet.

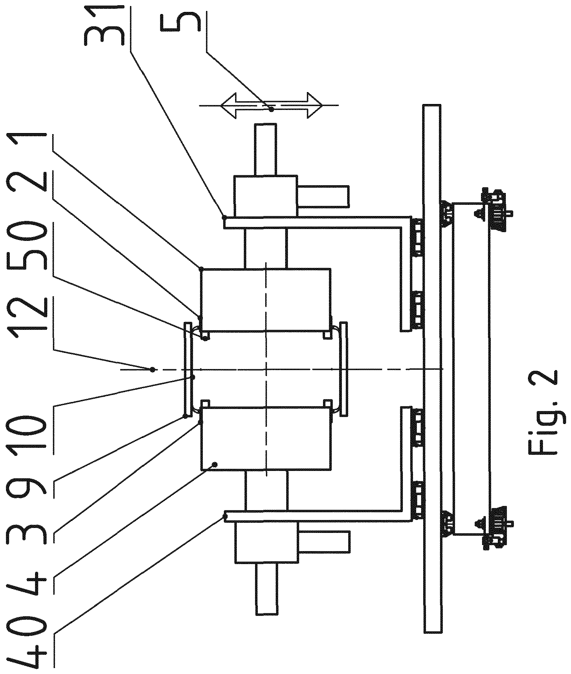

Die Figur 2 zeigt den Verfahrensschritt, bei dem die Seitenwandtrommeln 1 und 4 expandiert worden sind, wodurch die aufliegenden Seitenwände 2 und 3 an die Reifenkarkasse 10 angebunden wird. Anschließend fallen die Seitenwandtrommeln 1 und 4 wieder ein, wodurch die Reifenkarkasse 10 mit den angebundenen Seitenwänden 2 und 3 wieder freigegeben wird. Im nächsten Verfahrensschritt werden die beiden Seitenwandtrommeln 1 und 4 zu beiden Seiten der Reifenkarkasse 10 herausgefahren und in die Ausgangsposition gebracht, wie sie in der Figur 1 dargestellt ist. Danach werden die beiden Seitenwandtrommeln 1 und 4 nach vorne senkrecht zur achxialen Achse 24 verfahren, damit die Reifenkarkasse 10 mit den angebundenen Seitenwänden 2 und 3 zur Bombiertrommel weiter transportiert werden kann.
In der Figur 2 ist ebenfalls ein weiteres Ausführungsbeispiel dargestellt, welches eine zusätzliche Hochschlagvorrichtung 50 umfasst, welches jeweils an der Seitenwandtrommel 1 und 4 in der dargestellten Weise angeordnet ist. Mit der zusätzlichen Hochschlagvorrichtung 50 erfolgt das Hochschlagen des innenliegenden überstehenden Seitenwandendes auf der Innenseite der Reifenkarkasse 10. Die Hochschlagvorrichtung kann beispielsweise ein nachgiebiges Element umfassen, welches beim Expandieren der Seitenwandtrommel die Seitenwandenden nach oben umkrempeln. Außerdem ist denkbar, dass das Hochschlagmittel Segmente umfasst, welches gegen die Seitenwandenden expandiert wird.
Anschließend erfolgt der Weitertransport zu einer Bombiertrommel, wie sie in der Figur 3 gezeigt ist.

Die Figur 3 zeigt den Verfahrensschritt, bei dem die Segmente 7 der Bombiertrommel 6 in radialer Richtung 13 expandieren. Dadurch erfolgt eine Übergabe der Reifenkarkasse 10 mit den Seitenwänden 2 und 3 an die Bombiertrommel.

Die Figur 4 zeigt den Verfahrensschritt, bei dem die Karkasstransfer-Einheit 9 von der Bombiertrommel 6 wegverfahren wird.

Die Figur 5 zeigt den Verfahrensschritt, bei dem das Gürtel-Laufstreifen-Paket 14 koaxial zur Bombiertrommel 6 positioniert wird.

Die Figur 6 zeigt den Verfahrensschritt, bei dem der Bombiervorgang eingeleitet wird. Die beiden Segmente 7 fahren beim Bombiervorgang in axialer Richtung 20 aufeinander zu, wobei die Reifenkarkasse 10 entsprechend nach radial außen gewölbt wird.

Die Figur 7 zeigt die Vereinigung der Reifenkarkasse 10 mit dem koaxial angeordneten Gürtel-Laufstreifen-Paket 14. Bei diesem Verfahrensschritt befinden sich die Rollenhebel 16 der Bombiertrommel 6 noch in einer Warteposition.

Die Figur 8 zeigt den Verfahrensschritt, bei dem die Seitenwände bereits an der Reifenkarkasse entsprechend hochgeschlagen wurden. Dieses Hochschlagen der Seitenwände erfolgt mit den Rollenhebeln 17, die auseinanderspreizen und dabei die aufliegenden Seitenwände 2 und 3 an der Reifenkarkasse hochschlagen. Da das Gürtel-Laufstreifen-Paket 14 bereits mit der Reifenkarkasse 10 vereinigt wurden ist, kann der obere Teil der Seitenwände über das Gürtel-Laufstreifen-Paket 14 angeordnet werden.

Die Figur 9 zeigt den Verfahrensschritt, bei dem die Segmente 7 in radialer Richtung 18 einfahren. Der fertiggestellte Reifenrohling 19 wird bei diesem Schritt freigegeben und kann anschließend von der Bombiertrommel 6 entnommen werden. Die Fertigstellung des Fahrzeugreifens erfolgt anschließend mit einem herkömmlichen Verfahren. Bei einer nicht dargestellten Variante wird die Seitenwand vor dem Transfer des Gürtelstreifenpaketes über die Bombiertrommel hochgeschlagen. Dadurch ist es möglich, die oberen Teile der Seitenwand unterhalb des Gürtel-Laufstreifen-Paketes anzuordnen.

### Bezugszeichenliste (ist Teil der Beschreibung)

- 1: Rechte bzw. erste Seitenwandtrommel
- 2: Rechte bzw. erste Seitenwand
- 3: Linke Seitenwand
- 4: Linke bzw. zweite Seitenwandtrommel
- 5: radiale Richtung
- 6: Bombiertrommel
- 7: Segmente für Kernklemmung
- 8: radiales Expandieren der Seitenwandtrommel
- 9: Karkasstransfer-Einheit
- 10: Reifenkarkasse mit Lagenumschlag
- 11: Lagenumschlag mit Kern
- 12: axiale Mitte der Reifenkarkasse
- 13: radiales Expandieren der Seitenwandtrommel
- 14: Gürtel-Laufstreifen-Paket
- 15: Bombiervorgang
- 16: Rollenhebel
- 17: Rollenhebel beim Hochschlagen der Seitenwände
- 18: radiales Einfahren der Segmente
- 19: fertig gestellter Reifenrohling
- 20: axiales Zusammenfahren der Segmente beim Bombiervorgang
- 21: axiale Symmetrielinie
- 22: Abstand der Seitenwandtrommeln
- 23: radiales Einfahren der Seitenwandtrommeln
- 24: axiale Richtung
- 25: linker Wulst
- 26: rechter Wulst
- 30: Trommelwelle
- 31: L-förmiges Trägersystem
- 32: Getriebe
- 33: Antrieb für Durchmesserverstellung
- 34: Antrieb für Trommelrotation
- 35: Schlittenlagerung für Schienensystem
- 36: verfahrbare Platte
- 37: Schlittenlagerung für zweites Schienensystem
- 38: Bodenplatte
- 39: Trommelwelle
- 40: L-förmiges Trägersystem
- 41: Getriebe
- 42: Schlittenlagerung für Schienensystem
- 43: Schlittenlagerung für zweites Schienensystem
- 50: zusätzliche Hochschlag-Vorrichtung an der Seitenwandtrommel

## Patentansprüche

1. Verfahren zur Herstellung eines Fahrzeugreifens mit einer Reifenkarkasse (10), Reifenwülsten mit Kernen, einem Reifengürtel und einem Laufstreifen mit folgenden Schritten:
a) Fertigstellen einer Reifenkarkasse (10) auf einer Karkasstrommel,
wobei auf der Karkasstrommel keine Reifenaufbauteile in Form von Seitenwänden (2, 3) aufgelegt werden,
b) Abnahme der Reifenkarkasse (10) von der Karkasstrommel mit einer Karkasstransfereinheit (9),
c) Verfahren der Karkasstransfereinehit (9) mit der Reifenkarkasse (10) zu einer Übergabeposition zum Anordnen von zwei Seitenwänden (2, 3), wobei die zwei Seitenwände (2, 3) auf jeweils einer separaten ersten und zweiten Seitenwandtrommel (1, 4) auf beiden Seiten der Reifenkarkasse (10) in axialer Richtung (24) angeordnet sind,
d) Verfahren der ersten und zweiten Seitenwandtrommel (1, 4) in axialer Richtung (24) zur axialen Mitte (12) der Reifenkarkasse (10),
wobei die Seitenwände (2, 3) auf den Seitenwandtrommeln (1, 4) koaxial zu den Reifenwülsten der Reifenkarkasse (10) und auf ein vorgegebenes Anlegemaß angeordnet werden,
e) Expandieren der ersten Seitenwand-Trommel (4) mit der ersten Seitenwand (3),
wobei über die Expansionsbewegung (8) die auf der ersten Seitenwand-Trommel (4) anliegende erste Seitenwand (3) mit der koaxial positionierten Reifenkarkasse (10) im Bereich des ersten Reifenwulstes (25) verbunden wird und
f) Expandieren der zweiten Seitenwand-Trommel (1) mit der zweiten Seitenwand (2),
wobei über die Expansionsbewegung (13) die auf der zweiten Seitenwand-Trommel (1) anliegende zweite Seitenwand (2) mit der koaxial positionierten Reifenkarkasse (10) im Bereich des zweiten Reifenwulstes (26) verbunden wird,
g) Einfallen der Seitenwandtrommeln (1, 4) und Verfahren der ersten und zweiten Seitenwandtrommel (1, 4) in axialer Richtung (24) nach außen,
wobei die Reifenkarkasse (10) zum Weitertransport freigegeben wird,
h) Verfahren der Karkasstransfereinheit (9) mit der Reifenkarkasse (10) und den angebundenen Seitenwänden (2, 3) koaxial zu einer Bombiertrommel (6),
i) Übergabe der Reifenkarkasse (10) von der Karkasstransfereinheit (9) an die Bombiertrommel (6),
j) Wegfahren der Karkasstransfereinheit (9) von der Bombiertrommel (6),
k) Bombieren der Reifenkarkasse (10) mit den auf beiden Seiten angebundenen Seitenwänden (2, 3),
wobei die Seitenwände (2, 3) mit einem Hochschlagmittel (16) seitlich an der Reifenkarkasse (10) hochgeschlagen werden und die Reifenkarasse (10) mit dem koaxial angeordneten Gürtel-Laufstreifen-Paket (14) vereinigt wird,
l) Fertigstellen des Reifenrohlings (19) mit weiteren Schritten.

2. Verfahren nach Anspruch 1,
**dadurch gekennzeichnet, dass**
die Schritte e) und f) im Wesentlichen gleichzeitig erfolgen, wodurch beide Seitenwände (2, 3) gleichzeitig an die Reifenwülsten (25, 26) der Reifenkarkasse (10) angebunden werden.

3. Verfahren nach einem der vorhergehenden Ansprüche,
**dadurch gekennzeichnet, dass**
beide Seitenwandtrommeln (1, 4) jeweils an einer separaten Trommelwelle (30, 39) angeordnet sind.

4. Verfahren nach einem der vorhergehenden Ansprüche,
**dadurch gekennzeichnet, dass**
die Trommelwellen (30, 39) für die Seitenwandtrommeln (1, 4) an einem L-förmigen Trägersystem (31, 40) angeordnet sind.

5. Verfahren nach einem der vorhergehenden Ansprüche,
**dadurch gekennzeichnet, dass**
bei Schritt d) die Seitenwandtrommeln (1, 4) über ein Schlittensystem in axialer Richtung auf ein vorgegebenes Anlegemaß verfahren werden, wobei jeweils mindestens eine Schlittenlagerung (35, 42) unter dem L-förmigen Trägersystem angeordnet ist.

6. Verfahren nach einem der vorhergehenden Ansprüche,
**dadurch gekennzeichnet, dass**
die Seitenwandtrommeln (1, 4) jeweils mit einem separaten Antrieb angetrieben werden, wobei jeweils ein Antrieb (30) für die Durchmesserverstellung und ein Antrieb (34) für die Trommelrotation vorgesehen ist.

7. Verfahren nach einem der vorhergehenden Ansprüche,
**dadurch gekennzeichnet, dass**
die beiden Seitenwandtrommeln (1, 4) mit dem L-förmigen Trägersystem (31, 39) auf einer verfahrbaren Platte (36) angeordnet sind.

8. Verfahren nach einem der vorhergehenden Ansprüche,
**dadurch gekennzeichnet, dass**
vor Schritt d) die beiden Seitenwandtrommeln (1, 4) mit dem L-förmigen Trägersystem (31, 39) mit einem zweiten Schienensystem für eine Vorwärtsbewegung senkrecht zur axialen Richtung (24) der Reifenkarkasse (10) jeweils neben der Reifenkarkasse (10) positioniert werden.

9. Verfahren nach einem der vorhergehenden Ansprüche,
**dadurch gekennzeichnet, dass**
vor Schritt d) die Reifenkarkasse (10) mit der Karkasstransfereinheit (9) von oben zwischen den beiden Seitenwandtrommeln (1, 4) positioniert wird.

10. Verfahren nach einem der vorhergehenden Ansprüche,
**dadurch gekennzeichnet, dass**
nach Schritt d) mit einer zusätzlichen Hochschlag-Vorrichtung (50) an den Seitenwandtrommeln (1, 4) das innenliegende überstehende Seitenwandende auf der Innenseite der Reifenkarkasse (10) hochgeschlagen wird.

11. Verfahren nach einem der vorhergehenden Ansprüche,
**dadurch gekennzeichnet, dass**
bei Schritt d) und e) die Seitenwände (2, 3) über eine Dehnung in radialer Richtung (8) mit der Reifenkarkasse (10) verbunden werden.

12. Verfahren nach einem der vorhergehenden Ansprüche,
**dadurch gekennzeichnet, dass**
bei Schritt a) die Reifenkarkasse (10) auf der Karkasstrommel mit einem Kern und einem Lagenumschlag (11) vorkonfektioniert wird.

13. Verfahren nach einem der vorhergehenden Ansprüche,
**dadurch gekennzeichnet, dass**
bei Schritt k) die Seitenwand (2, 3) nach dem Transfer des Gürtel-Laufstreifen-Paketes (14) über die Bombiertrommel (6) hochgeschlagen wird, wobei ein Teil der Seitenwand (2, 3) über dem Laufstreifen angeordnet werden kann.

## Claims

1. Method for producing a vehicle tire with a tire carcass (10), tire beads with cores, a tire breaker belt and a tread, with the following steps:
a) completing a tire carcass (10) on a carcass drum,
no tire building parts in the form of sidewalls (2, 3) being placed on the carcass drum,
b) removing the tire carcass (10) from the carcass drum by a carcass transfer unit (9),
c) moving the carcass transfer unit (9) with the tire carcass (10) to a transfer position for arranging two sidewalls (2, 3),
the two sidewalls (2, 3) being arranged on both sides of the tire carcass (10) in an axial direction (24) on a separate first sidewall drum (1) and second sidewall drum (4) respectively,
d) moving the first and second sidewall drums (1, 4) in an axial direction (24) toward the axial center (12) of the tire carcass (10),
the sidewalls (2, 3) being arranged on the sidewall drums (1, 4) coaxially in relation to the tire beads of the tire carcass (10) and with a predetermined placement gage,
e) expanding the first sidewall drum (4) with the first sidewall (3), the first sidewall (3), which is lying against the first sidewall drum (4), being connected to the coaxially positioned tire carcass (10) in the region of the first tire bead (25) by way of the expansion movement (8), and
f) expanding the second sidewall drum (1) with the second sidewall (2), the second sidewall (2), which is lying against the second sidewall drum (1), being connected to the coaxially positioned tire carcass (10) in the region of the second tire bead (26) by way of the expansion movement (13),
g) collapsing the sidewall drums (1, 4) and moving the first and second sidewall drums (1, 4) outward in an axial direction (24),
the tire carcass (10) being released for further transport,
h) moving the carcass transfer unit (9) with the tire carcass (10) and the attached sidewalls (2, 3) so as to be coaxial in relation to a shaping drum (6),
i) transferring the tire carcass (10) from the carcass transfer unit (9) to the shaping drum (6),
j) moving the carcass transfer unit (9) away from the shaping drum (6),
k) shaping the tire carcass (10) with the sidewalls (2, 3) attached on both sides,
the sidewalls (2, 3) being turned up by a turning-up means (16) to the sides of the tire carcass (10) and the tire carcass (10) being brought together as one with the coaxially arranged belt-tread assembly (14),
l) completing the tire blank (19) by further steps.

2. Method according to Claim 1,
**characterized in that**
steps e) and f) are performed substantially at the same time, whereby both sidewalls (2, 3) are attached to the tire beads (25, 26) of the tire carcass (10) at the same time.

3. Method according to either of the preceding claims,
**characterized in that**
the two sidewall drums (1, 4) are respectively arranged on a separate drum shaft (30, 39).

4. Method according to one of the preceding claims,
**characterized in that**
the drum shafts (30, 39) for the sidewall drums (1, 4) are arranged on an L-shaped carrier system (31, 40) .

5. Method according to one of the preceding claims,
**characterized in that**
in step d), the sidewall drums (1, 4) are moved by way of a carriage system in an axial direction to a predetermined placement gage, at least one carriage mounting (35, 42) being respectively arranged under the L-shaped carrier system.

6. Method according to one of the preceding claims,
**characterized in that**
the sidewall drums (1, 4) are respectively driven by a separate drive, a drive (30) for the diameter adjustment and a drive (34) for the drum rotation being respectively provided.

7. Method according to one of the preceding claims,
**characterized in that**
the two sidewall drums (1, 4) with the L-shaped carrier system (31, 39) are arranged on a movable plate (36).

8. Method according to one of the preceding claims,
**characterized in that**
before step d), the two sidewall drums (1, 4) with the L-shaped carrier system (31, 39) are respectively positioned next to the tire carcass (10) by a second rail system for a forward movement perpendicularly to the axial direction (24) of the tire carcass (10).

9. Method according to one of the preceding claims,
**characterized in that**
before step d), the tire carcass (10) is positioned by the carcass transfer unit (9) between the two sidewall drums (1, 4) from above.

10. Method according to one of the preceding claims,
**characterized in that**
after step d), the inner overhanging sidewall end is turned up on the inner side of the tire carcass (10) by an additional turning-up device (50) on the sidewall drums (1, 4).

11. Method according to one of the preceding claims,
**characterized in that**
in steps d) and e), the sidewalls (2, 3) are connected to the tire carcass (10) by way of an expansion in the radial direction (8).

12. Method according to one of the preceding claims,
**characterized in that**
in step a), the tire carcass (10) is prefabricated on the carcass drum with a core and a ply turnup (11) .

13. Method according to one of the preceding claims,
**characterized in that**
in step k), the sidewall (2, 3) is turned up after the transfer of the belt-tread assembly (14) by way of the shaping drum (6), it being possible for part of the sidewall (2, 3) to be arranged over the tread.

## Revendications

1. Procédé de fabrication d'un pneu de véhicule comprenant une carcasse de pneu (10), des talons de pneu avec des tringles, une ceinture de pneu et une bande de roulement, comprenant les étapes suivantes :
a) fabrication d'une carcasse de pneu (10) sur un tambour de carcasse, aucune pièce de construction du pneu sous forme de parois latérales (2, 3) n'étant posée sur le tambour de carcasse,
b) enlèvement de la carcasse de pneu (10) du tambour de carcasse avec une unité de transfert de carcasse (9),
c) déplacement de l'unité de transfert de carcasse (9) avec la carcasse de pneu (10) jusqu'à une position de transfert pour l'agencement de deux parois latérales (2, 3), les deux parois latérales (2, 3) étant disposées sur un premier et un deuxième tambour de paroi latérale (1, 4) séparés respectivement, des deux côtés de la carcasse de pneu (10) dans la direction axiale (24),
d) déplacement du premier et du deuxième tambour de paroi latérale (1, 4) dans la direction axiale (24) jusqu'au centre axial (12) de la carcasse de pneu (10), les parois latérales (2, 3) étant disposées sur les tambours de parois latérales (1, 4) coaxialement par rapport aux talons de pneu de la carcasse de pneu (10) et sur une dimension d'application prédéfinie,
e) expansion du premier tambour de paroi latérale (4) avec la première paroi latérale (3), la première paroi latérale (3) s'appliquant sur le premier tambour de paroi latérale (4) étant connectée par le biais du mouvement d'expansion (8) à la carcasse de pneu (10) positionnée coaxialement dans la région du premier talon de pneu (25) et
f) expansion du deuxième tambour de paroi latérale (1) avec la deuxième paroi latérale (2), la deuxième paroi latérale (2) s'appliquant sur le deuxième tambour de paroi latérale (1) étant connectée par le biais du mouvement d'expansion (13) à la carcasse de pneu (10) positionnée coaxialement dans la région du deuxième talon de pneu (26),
g) rétraction des tambours de parois latérales (1, 4) et déplacement du premier et du deuxième tambour de paroi latérale (1, 4) dans la direction axiale (24) vers l'extérieur, la carcasse de pneu (10) étant libérée en vue du transport ultérieur,
h) déplacement de l'unité de transfert de carcasse (9) avec la carcasse de pneu (10) et les parois latérales raccordées (2, 3) coaxialement à un tambour de bombement (6),
i) transfert de la carcasse de pneu (10) de l'unité de transfert de carcasse (9) au tambour de bombement (6),
j) écartement de l'unité de transfert de carcasse (9) du tambour de bombement (6),
k) bombement de la carcasse de pneu (10) avec les parois latérales (2, 3) raccordées des deux côtés,
les parois latérales (2, 3) étant relevées avec un moyen de relèvement (16) latéralement au niveau de la carcasse de pneu (10) et la carcasse de pneu (10) étant réunie au paquet de ceinture-bande de roulement (14) disposé coaxialement,
l) finition de l'ébauche de pneu (19) avec des étapes additionnelles.

2. Procédé selon la revendication 1,
**caractérisé en ce que**
les étapes e) et f) s'effectuent essentiellement simultanément, de sorte que les deux parois latérales (2, 3) soient raccordées simultanément aux talons de pneu (25, 26) de la carcasse de pneu (10) .

3. Procédé selon l'une quelconque des revendications précédentes,
**caractérisé en ce que**
les deux tambours de parois latérales (1, 4) sont à chaque fois disposés sur un arbre de tambour séparé (30, 39) .

4. Procédé selon l'une quelconque des revendications précédentes,
**caractérisé en ce que**
les arbres de tambour (30, 39) pour les tambours de parois latérales (1, 4) sont disposés sur un système de support en forme de L (31, 40).

5. Procédé selon l'une quelconque des revendications précédentes,
**caractérisé en ce que**
à l'étape d), les tambours de parois latérales (1, 4) sont déplacés par le biais d'un système de chariot dans la direction axiale sur une dimension d'application prédéfinie, au moins un support sur palier de chariot (35, 42) étant à chaque fois disposé sous le système de support en forme de L.

6. Procédé selon l'une quelconque des revendications précédentes,
**caractérisé en ce que**
les tambours de parois latérales (1, 4) sont à chaque fois entraînés avec un entraînement séparé, un entraînement (30) pour le réglage de diamètre et un entraînement (34) pour la rotation du tambour étant prévus.

7. Procédé selon l'une quelconque des revendications précédentes, **caractérisé en ce que**
les deux tambours de parois latérales (1, 4) sont disposés avec le système de support en forme de L (31, 39) sur une plaque déplaçable (36).

8. Procédé selon l'une quelconque des revendications précédentes,
**caractérisé en ce que**
avant l'étape d), les deux tambours de parois latérales (1, 4) avec le système de support en forme de L (31, 39) sont positionnés, avec un deuxième système de rail pour un déplacement vers l'avant perpendiculairement à la direction axiale (24) de la carcasse de pneu (10), à chaque fois à côté de la carcasse de pneu (10).

9. Procédé selon l'une quelconque des revendications précédentes,
**caractérisé en ce que**
avant l'étape d), la carcasse de pneu (10) est positionnée avec l'unité de transfert de carcasse (9) par le haut entre les deux tambours de parois latérales (1, 4).

10. Procédé selon l'une quelconque des revendications précédentes,
**caractérisé en ce que**
après l'étape d), l'extrémité de paroi latérale située à l'intérieur et dépassant, est relevée sur le côté intérieur de la carcasse de pneu (10) au moyen d'un dispositif de relèvement supplémentaire (50) au niveau des tambours de parois latérales (1, 4).

11. Procédé selon l'une quelconque des revendications précédentes,
**caractérisé en ce que**
dans les étapes d) et e), les parois latérales (2, 3) sont connectées à la carcasse de pneu (10) par le biais d'une extension dans la direction radiale (8).

12. Procédé selon l'une quelconque des revendications précédentes,
**caractérisé en ce que**
dans l'étape a), la carcasse de pneu (10) est préconfectionnée sur le tambour de carcasse avec une tringle et un retournement de pli (11).

13. Procédé selon l'une quelconque des revendications précédentes,
**caractérisé en ce que**
dans l'étape k), la paroi latérale (2, 3) est relevée par-dessus le tambour de bombement (6) après le transfert du paquet de ceinture-bande de roulement (14), une partie de la paroi latérale (2, 3) pouvant être disposée par-dessus la bande de roulement.
